# EUROPÄISCHE PATENTANMELDUNG

(11) **EP 1 530 104 A2**
(43) Veröffentlichungstag der Anmeldung: **11.05.2005**
(21) Anmeldenummer: 04023530.1
(22) Anmeldetag: 02.10.2004
(51) Int. Cl.: G05B 19/042

(54) **Steuergerät**

(30) Priorität: 25.10.2003 DE 10349906
(71) Anmelder: ABB PATENT GmbH, 68526 Ladenburg (DE)
(72) Erfinder: Merkel, Hans-Peter, Dipl.-Ing., 69198 Schriesheim (DE); Zank, Gunnar, Dipl.-Ing., 06179 Teutschenthal (DE)
(74) Vertreter: Miller, Toivo

(57) **Zusammenfassung**

Die Erfindung betrifft ein Steuergerät (10) zum Steuern und Überwachen von Schaltgeräten und/oder Verbrauchern in einer Schaltanlage, das eine programmierbare Steuerung (17) und parametrierbare Schutzfunktionen (18), sowie ein Kommunikationsmodul (11) mit einer Kommunikationsschnittstelle (12) zum Anschluss an ein Steuerungsnetzwerk (50) aufweist.

Die Erfindung betrifft weiterhin ein System (40) zum Steuern und Überwachen von Schaltgeräten und/oder Verbrauchern in einer Schaltanlage, welches mindestens ein Steuergerät (10) der oben genannten Art umfasst.

## Beschreibung

Die Erfindung betrifft ein Steuergerät zum Steuern und Überwachen von Schaltgeräten und/oder Verbrauchern in einer Schaltanlage, insbesondere in einer Niederspannungsschaltanlage. Die Erfindung betrifft weiterhin ein System zum Steuern und Überwachen von Schaltgeräten und/oder Verbrauchern, welches mindestens ein erfindungsgemäßes Steuergerät aufweist.

Ein Steuergerät der eingangs genannten Art, welches eine speicherprogrammierbare Steuerung, Motorschutzfunktionen und ein Kommunikationsteil mit Busschnittstelle zum Anschluss an einen Feldbus aufweist, ist aus der Druckschrift DE 94 16 303 U1 bekannt. Zur Anbindung des Feldbusses an einen Bus eines Leitsystems ist ein Buskoppler vorgesehen, welcher eine Anpassung von verschiedenartigen Telegramm-Rahmen (Frames) zwischen Feldbus und Leitsystem-Bus durchführt.

Somit ist eine Kommunikation des Steuergeräts mit einem Bedienplatz, welcher an den Bus des Leitsystems angeschlossen ist, möglich. Ein solcher Leitsystem-Bus wird im folgenden auch als Steuerungsnetzwerk bezeichnet. Ein Steuerungsnetzwerk basiert dabei auf standardisierten Bussystemen, wobei zur Datenübertragung standardisierte Kommunikationsprotokolle verwendet werden.

Ein direkter Datenaustausch zwischen zwei oder mehreren Steuergeräten ist bei herkömmlichen Steuerungssystemen nicht vorgesehen. Daten, beispielsweise Verriegelungsinformationen, welche von einem ersten Steuergerät zu einem zweiten Steuergerät zu übertragen sind, werden beispielsweise von dem ersten Steuergerät zu einem übergeordneten Leitsystem übertragen, welches die Daten dann zu dem zweiten Steuergerät weiterleitet. Auch ist es nicht möglich, durch diese Art der Datenübertragung, welche den Feldbus, den Buskoppler, das Steuerungsnetzwerk und das Leitsystem belastet, Daten von dem ersten Steuergerät ohne zeitliche Verzögerung zu dem zweiten Steuergerät zu übertragen.

Der Erfindung liegt die Aufgabe zugrunde, ein vereinfachtes Schalten und Überwachen von Schaltgeräten und/oder Verbrauchern in einer Schaltanlage zu ermöglichen.

Diese Aufgabe wird erfindungsgemäß durch ein Steuergerät mit den im Anspruch 1 genannten Merkmalen, sowie durch ein System mit den im Anspruch 9 genannten Merkmalen gelöst. Weitere vorteilhafte Ausgestaltungen der Erfindung sind in den weiteren Ansprüchen und in der Figurenbeschreibung angegeben.

Das erfindungsgemäße Steuergerät zum Steuern und Überwachen von Schaltgeräten, wie beispielsweise Leistungsschalter oder Schütze, und/oder von Verbrauchern, wie beispielsweise Elektromotoren, Heizungen, Stellantriebe oder Pumpen, weist eine programmierbare Steuerung und parametrierbare Schutzfunktionen auf. Weiterhin verfügt das erfindungsgemäße Steuergerät über mindestens ein Kommunikationsmodul, welches mindestens eine Kommunikationsschnittstelle zum Anschluss an ein Steuerungsnetzwerk aufweist. Die mindestens eine Kommunikationsschnittstelle dient dabei sowohl zur Kommunikation mit einem übergeordneten Leitsystem als auch zur direkten Kommunikation mit anderen Steuergeräten über das Steuerungsnetzwerk.

Somit ist ein direkter Datenaustausch von beispielsweise einem ersten Steuergerät mit einem zweiten Steuergerät über das Steuerungsnetzwerk, an welches die beiden Steuergeräte mittels ihrer Kommunikationsschnittstellen angeschlossen sind, ermöglicht. Eine zeitliche Verzögerung der Datenübertragung ist nur durch das Steuerungsnetzwerk bedingt; eine zusätzliche Verzögerung durch weitere Komponenten, wie Feldbus, Buskoppler oder Leitsystem, erfolgt nicht. Somit ist die zeitliche Verzögerung der Datenübertragung von einem Steuergerät zu einem anderen Steuergerät verringert.

Im Gegensatz zu Steuerungsnetzwerken, welche auf standardisierten Bussystemen basieren, und bei denen zur Datenübertragung standardisierte Kommunikationsprotokolle verwendet werden, handelt es sich bei Feldbussen in der Regel um herstellerspezifisch ausgeführte Bussysteme mit herstellerspezifischen Kommunikationsprotokollen, die in der Regel nicht zueinander kompatibel sind. Auch sind Kommunikationsprotokolle von Feldbussen nicht zum Kommunikationsprotokoll eines Steuerungsnetzwerkes kompatibel, so dass Buskoppler zur Protokollumsetzung benötigt werden.

Steuerungsnetzwerke sind beispielsweise Kommunikationsnetzwerke vom Typ Ethernet, wobei als Übertragungsprotokoll beispielsweise TCP/IP verwendet wird. Solche Netzwerke sind sowohl in industriellen Anwendungen als auch bei der Bürokommunikation weit verbreitet. Durch den Anschluss des Steuergerätes an ein solches Steuerungsnetzwerk ist somit eine direkte Kommunikation des Steuergeräts mit einer Vielzahl weiterer Geräte, beispielsweise Computer, die an das selbe Steuerungsnetzwerk angeschlossen sind, möglich.

Zur Kommunikation des Steuergeräts mit dem Bedienplatz eines Leitsystems, der an das selbe Steuerungsnetzwerk angeschlossen ist, wird somit kein Buskoppler zur Umsetzung von verschiedenen Kommunikationsprotokollen benötigt. Dadurch ist auch die Verzögerung der Datenübertragung von dem Steuergerät zu dem Bedienplatz des Leitsystems, sowie in umgekehrter Richtung, verringert.

In einer vorteilhaften Ausgestaltung der Erfindung ist daher die mindestens eine Kommunikationsschnittstelle des Steuergeräts vom Typ Ethernet. Dadurch ist das Steuergerät an ein Steuerungsnetzwerk vom Typ Ethernet, welches ein weitverbreitetes Kommunikationsnetzwerk ist, anschließbar.

In einer weiteren vorteilhaften Ausgestaltung der Erfindung verfügt ein Steuergerät über mehrere Kommunikationsschnittstellen zum Anschluss an jeweils ein Steuerungsnetzwerk. Durch Anschluss des Steuergeräts an schaltungstechnisch parallele Steuerungsnetzwerke ist eine redundante Kommunikation über die parallelen Steuerungsnetzwerke durchführbar, wodurch die Ausfallsicherheit des jeweiligen Gesamtsystems erhöht wird.

In einer weiteren vorteilhaften Ausgestaltung der Erfindung verfügt ein Steuergerät zusätzlich über mindestens eine Kommunikationsschnittstelle zum Anschluss an einen Feldbus. Eine Kommunikationsschnittstelle zum Anschluss an einen Feldbus gestattet es, ein entsprechendes Steuergerät in einer vorhandenen Schaltanlage, welche lediglich über einen Feldbus verfügt, beispielsweise vom Typ Profibus, LON (Local Operating Network), CAN (Controller Area Network), Ethernet oder Modbus, zu betreiben.

In einer weiteren vorteilhaften Ausgestaltung der Erfindung verfügt ein Steuergerät über eine Bedieneinheit zur Darstellung von Schaltzuständen und/oder zur Eingabe von Schaltbefehlen.

In einer weiteren vorteilhaften Ausgestaltung der Erfindung verfügt ein Steuergerät über mindestens eine Programmierschnittstelle zum Anschluss eines Programmiergeräts. Über die Programmierschnittstelle sind beispielsweise Laden und/oder Auslesen eines Steuerungsprogramms und/oder Änderungen von Schutzparametern unabhängig von einem übergeordneten Leitsystem möglich.

Vorteilhafterweise ist die Programmierschnittstelle als drahtlose Schnittstelle, beispielsweise als optische Schnittstelle unter Verwendung von Optokopplern, als Infrarotschnittstelle (IrDa), als Funkübertragungs-Schnittstelle oder als Wireless-LAN-Schnittstelle, ausgeführt, wodurch eine kabellose Datenübertragung zwischen dem Programmiergerät und der Programmierschnittstelle des Steuergeräts ermöglicht ist.

In einer weiteren vorteilhaften Ausgestaltung der Erfindung verfügt das Steuergerät über Anschlussplätze zur Aufnahme von Funktionsmodulen. Funktionsmodule enthalten beispielsweise Schnittstellen zum Anschluss von Sensoren, wie beispielsweise Temperaturfühler, und/oder Aktoren, beispielsweise Relais. Durch Bestückung mit solchen Funktionsmodulen kann das Steuergerät variabel an unterschiedliche Erfordernisse angepasst werden.

Des weiteren ist erfindungsgemäß ein System zum Steuern und Überwachen von Schaltgeräten und/oder Verbrauchern in einer Schaltanlage vorgesehen, welches mindestens ein erfindungsgemäßes Steuergerät aufweist.

In einer vorteilhaften Weiterbildung des Systems ist das mindestens eine Steuergerät an ein Steuerungsnetzwerk angeschlossen, an welches auch ein Leitsystem angeschlossen ist, wobei das Steuergerät über das Steuerungsnetzwerk direkt mit dem Leitsystem kommuniziert. Ein solches Steuerungssystem weist im Vergleich zu herkömmlichen Steuerungssystemen einen vereinfachten Aufbau auf, da das Steuergerät und das Leitsystem an das selbe Steuerungsnetzwerk angeschlossen sind, und somit kein Feldbus und kein Buskoppler benötigt werden.

In einer vorteilhaften Ausgestaltung des Systems sind mindestens zwei erfindungsgemäße Steuergeräte vorgesehen, welche an das selbe Steuerungsnetzwerk angeschlossen sind und über dieses Steuerungsnetzwerk miteinander kommunizieren.

In einer weiteren vorteilhaften Ausgestaltung des Systems sind mindestens zwei Steuergeräte vorgesehen, die jeweils mindestens eine zusätzliche Kommunikationsschnittstelle zum Anschluss an einen Feldbus aufweisen. Die Steuergeräte sind dabei an den selben Feldbus angeschlossen und kommunizieren über diesen Feldbus miteinander.

Diese und weitere vorteilhafte Ausgestaltungen der Erfindung sind Gegenstand der abhängigen Ansprüche.

Anhand der beigefügten Figuren sollen die Erfindung, vorteilhafte Ausgestaltungen, sowie Verbesserungen und Vorteile der Erfindung näher erläutert und beschrieben werden.

Es zeigen:
- Fig. 1: ein Blockschaltbild eines beispielhaften Steuergeräts zum Steuern und Überwachen von Schaltgeräten und/oder Verbrauchern,
- Fig. 2: einen beispielhaften Aufbau eines Steuerungssystems mit Steuergeräten zum Steuern und Überwachen von Schaltgeräten und/oder Verbrauchern und
- Fig. 3: ein beispielhaftes herkömmliches Steuerungssystem, an das erfindungsgemäße Steuergeräte angeschlossen sind.

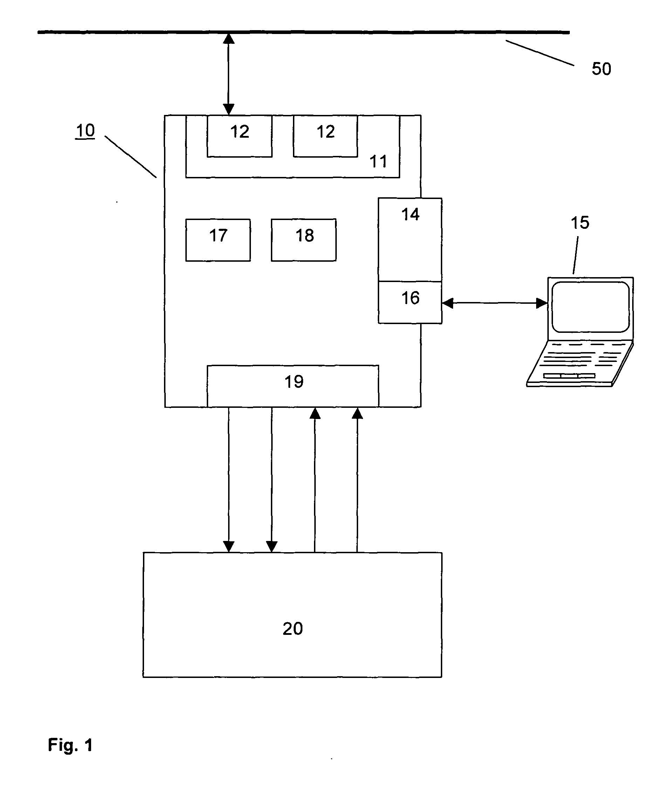

In Fig. 1 ist ein Blockschaltbild eines beispielhaften Steuergeräts zum Steuern und Überwachen von Schaltgeräten und/oder Verbrauchern dargestellt. Das Steuergerät 10 verfügt über ein Kommunikationsmodul 11, welches zwei Kommunikationsschnittstellen 12 aufweist. Mittels der Kommunikationsschnittstellen 12, welche beispielsweise vom Typ Ethernet oder FireWire sind, ist das Steuergerät 10 an zwei Steuerungsnetzwerke anschließbar. In der gezeigten Darstellung ist eine der beiden Kommunikationsschnittstellen 12 an ein Steuerungsnetzwerk 50 angeschlossen.

Weiterhin ist eine Bedieneinheit 14 vorgesehen, die Schalter und/oder eine Tastatur zur Eingabe von Schaltbefehlen und zur Alarmquittierung aufweist. Weiterhin verfügt die Bedieneinheit 14 über LEDs und/oder einen Monitor zur Darstellung von Schaltzuständen und sonstigen Meldungen. Die Bedieneinheit 14 kann beispielsweise, wie in Fig. 1 dargestellt, direkt am Steuergerät 10 befestigt sein. Alternativ ist es möglich, die Bedieneinheit 14 mittels eines Verbindungskabels über eine entsprechende Schnittstelle mit dem Steuergerät 10 zu verbinden. Auch kann eine Funkverbindung zwischen der Bedieneinheit 14 und dem Steuergerät 10 vorgesehen sein.

Das Steuergerät 10 verfügt über eine Ein-/Ausgabeeinheit 19 zum Anschluss eines zu überwachenden Schaltgeräts und/oder Verbrauchers, in der gezeigten Darstellung ist ein Leistungsschalter 20 angeschlossen. Hierzu weist die Ein-/Ausgabeeinheit 19 beispielsweise binäre Eingänge zum Einlesen von Stellungsmeldungen und/oder binäre Ausgänge zur Ausgabe von Schaltbefehlen auf. Auch analoge Ausgänge zur Ausgabe von Sollwerten und/oder analoge Eingänge zum Einlesen von Analogwerten, wie beispielsweise Ströme und/oder Spannungen, sind vorsehbar.

Weiterhin weist das Steuergerät 10 eine frei programmierbare Steuerung 17 und parametrierbare Schutzfunktionen 18 auf. Die parametrierbaren Schutzfunktionen umfassen beispielsweise Funktionen für Überstromschutz und/oder Motorschutz.

Eine Programmierschnittstelle 16 ist zum Anschluss eines Programmiergerätes 15 vorgesehen. Mittels des an die Programmierschnittstelle 16 angeschlossenen Programmiergeräts 15 ist eine Programmierung der Steuerung 17 und/oder eine Parametrierung der Schutzfunktionen 18 durchführbar. Als Programmiergerät 15 ist eine elektronische Datenverarbeitungseinrichtung, insbesondere ein Digitalrechner, vorgesehen. Eine solche Datenverarbeitungseinrichtung ist beispielsweise ein PC (Personal Computer), ein Notebook oder ein PDA (Personal Digital Assistant).

Alternativ ist eine Programmierung der Steuerung 17, sowie eine Parametrierung der Schutzfunktionen 18 des Steuergeräts 10 auch mittels eines Leitsystems über das Steuerungsnetzwerk 50 möglich, an welches das Steuergerät 10 mittels einer der Kommunikationsschnittstellen 12 angeschlossen ist.

Die programmierbare Steuerung 17 und die Schutzfunktionen 18 des Steuergeräts 10 enthalten jeweils eine Grundkonfiguration, die anlagenspezifisch angepasst werden kann. Die Programmierung der Steuerung erfolgt beispielsweise nach der Norm IEC-61131-3.

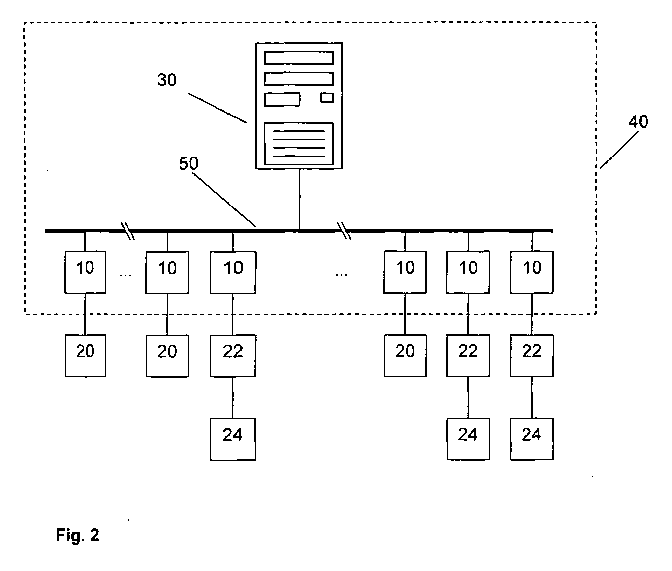

In Fig. 2 ist ein beispielhafter Aufbau eines Steuerungssystems mit Steuergeräten 10 zum Steuern und Überwachen von Schaltgeräten und/oder Verbrauchern dargestellt. Das Steuerungssystem 40 umfasst mehrere Steuergeräte 10 zum Steuern und Überwachen von Schaltgeräten und/oder Verbrauchern, ein Steuerungsnetzwerk 50 zum Datenaustausch, sowie einen Bedienplatz 30 eines Leitsystems. Dabei sind die Steuergeräte 10 und der Bedienplatz 30 direkt an das Steuerungsnetzwerk 50 angeschlossen.

Das Steuerungsnetzwerk 50 basiert auf standardisierten Bussystemen, beispielsweise vom Typ Ethernet, wobei als Übertragungsprotokoll beispielsweise TCP/IP verwendet wird.

Über das Steuerungsnetzwerk 50 ist ein direkter Datenaustausch von einem Steuergerät 10 mit einem anderen Steuergerät 10, beispielsweise zur Übertragung von Verriegelungsinformationen, vorgesehen.

Zusätzlich ist ein direkter Datenaustausch zwischen den Steuergeräten 10 und dem Bedienplatz 30 über das Steuerungsnetzwerk 50 vorgesehen, wobei beispielsweise Stellungsmeldungen von den Steuergeräten 10 zum Bedienplatz 30 und/oder Schaltbefehle von dem Bedienplatz 30 zu den Steuergeräten 10 übertragen werden. Dadurch ist eine Steuerung und Überwachung einer Schaltanlage auch von einem Bedienplatz aus möglich.

So ist zum Beispiel ein Steuergerät 10 zum Steuern und Überwachen eines Leistungsschalters 20 vorgesehen. Zur Steuerung und Überwachung eines Elektromotors 24 ist beispielsweise zusätzlich ein Schütz 22 vorgesehen, wobei das Steuergerät 10 das Schütz 22 ansteuert, welches den durch den Elektromotor 24 fließenden Strom schaltet.

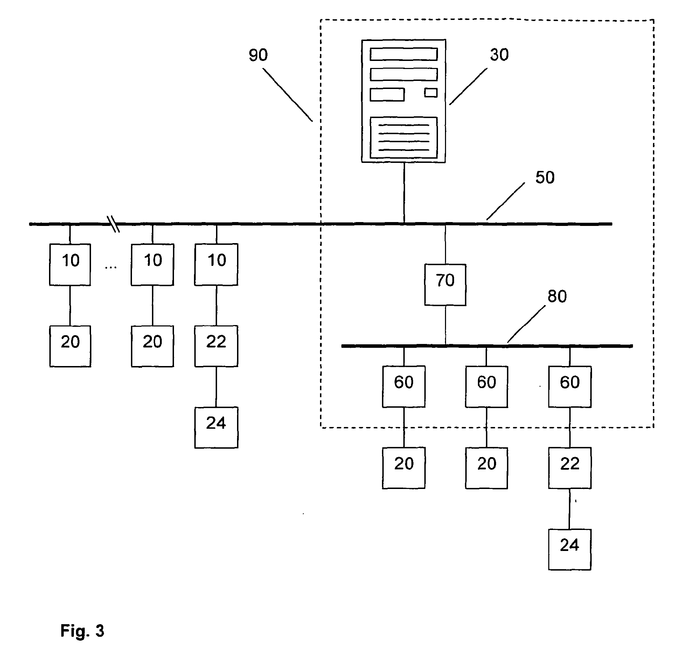

In Fig. 3 ist beispielhaft ein herkömmliches Steuerungssystem 90 dargestellt, an welches zusätzlich erfindungsgemäße Steuergeräte 10 angeschlossen sind.

Das herkömmliche Steuerungssystem 90 weist einen Bedienplatz 30, ein Steuerungsnetzwerk 50 und einen Buskoppler 70 auf, wobei der Bedienplatz 30 und der Buskoppler 70 an das Steuerungsnetzwerk 50 angeschlossen sind. Weiterhin ist ein Feldbus 80 vorhanden, an welchen der Buskoppler 70 und mehrere herkömmliche Steuergeräte 60 angeschlossen sind.

Eine Kommunikation der herkömmlichen Steuergeräte 60 miteinander ist nicht vorgesehen. Die herkömmlichen Steuergeräte 60 kommunizieren lediglich mit dem Bedienplatz 30.

Auf dem Feldbus 80 wird ein anderes Kommunikationsprotokoll verwendet als auf dem Steuerungsnetzwerk 50. Deshalb ist der Buskoppler 70 vorgesehen, der den Feldbus 80 und das Steuerungsnetzwerk 50 miteinander verbindet und eine Umsetzung der unterschiedlichen Kommunikationsprotokolle vornimmt.

An das herkömmliche Steuerungssystems 90 sind erfindungsgemäße Steuergeräte 10 angeschlossen. Im Gegensatz zu den herkömmlichen Steuergeräten 60 sind die erfindungsgemäßen Steuergeräte 10 jedoch nicht an den Feldbus 80, sondern direkt an das Steuerungsnetzwerk 50 angeschlossen.

So ist es beispielsweise möglich, ein bestehendes herkömmliches Steuerungssystem 90 durch Hinzufügen von erfindungsgemäßen Steuerungsgeräten 10 zu erweitern, ohne aufwendige Änderungen an dem bestehenden herkömmlichen Steuerungssystem 90 durchzuführen. Lediglich die Konfiguration des Bedienplatzes 30 ist gegebenenfalls zu erweitern, beziehungsweise anzupassen.

## Patentansprüche

1. Steuergerät (10) zum Steuern und Überwachen von Schaltgeräten und/oder Verbrauchern in einer Schaltanlage,
wobei das Steuergerät (10) eine programmierbare Steuerung (17) und parametrierbare Schutzfunktionen (18) aufweist,
**dadurch gekennzeichnet, dass**
das Steuergerät (10) mindestens ein Kommunikationsmodul (11) mit wenigstens einer Kommunikationsschnittstelle (12) zum Anschluss an ein Steuerungsnetzwerk (50) zur Kommunikation mit einem übergeordneten Leitsystem und/oder mit anderen Steuergeräten (10) über das Steuerungsnetzwerk (50) aufweist.

2. Steuergerät (10) nach Anspruch 1, **dadurch gekennzeichnet, dass** die wenigstens eine Kommunikationsschnittstelle (12) vom Typ Ethernet ist.

3. Steuergerät (10) nach einem der vorstehenden Ansprüche, **dadurch gekennzeichnet, dass** mehrere Kommunikationsschnittstellen (12) zum Anschluss an jeweils ein Steuerungsnetzwerk (50) vorgesehen sind.

4. Steuergerät (10) nach einem der vorstehenden Ansprüche, **dadurch gekennzeichnet, dass** mehrere Kommunikationsschnittstellen (12) vorgesehen sind, wobei mindestens eine Kommunikationsschnittstelle (12) zum Anschluss an einen Feldbus vorgesehen ist.

5. Steuergerät (10) nach einem der vorstehenden Ansprüche, **dadurch gekennzeichnet, dass** mindestens eine Bedieneinheit (14) zur Darstellung von Schaltzuständen und/oder zur Eingabe von Schaltbefehlen vorgesehen ist.

6. Steuergerät (10) nach einem der vorstehenden Ansprüche, **dadurch gekennzeichnet, dass** mindestens eine Programmierschnittstelle (16) zum Anschluss eines Programmiergeräts (15) vorgesehen ist.

7. Steuergerät (10) nach Anspruch 6, **dadurch gekennzeichnet, dass** die mindestens eine Programmierschnittstelle (16) als drahtlose Schnittstelle, insbesondere als optische Schnittstelle oder als Infrarotschnittstelle oder als Funkübertragungs-Schnittstelle oder als Wireless-LAN-Schnittstelle, ausgeführt ist.

8. Steuergerät (10) nach einem der vorstehenden Ansprüche, **dadurch gekennzeichnet, dass** Anschlussplätze zur Aufnahme von Funktionsmodulen vorgesehen sind.

9. System (40) zum Steuern und Überwachen von Schaltgeräten und/oder Verbrauchern in einer Schaltanlage,
**dadurch gekennzeichnet, dass**
mindestens ein Steuergerät (10) nach einem der vorstehenden Ansprüche vorgesehen ist.

10. System (40) nach Anspruch 9, **dadurch gekennzeichnet dass**,
das mindestens eine Steuergerät (10) nach einem der Ansprüche 1 bis 8 mittels eines Steuerungsnetzwerks (50) mit einem Leitsystem (30) kommuniziert.

11. System (40) nach einem der Ansprüche 9 bis 10, **dadurch gekennzeichnet dass**, mindestens zwei Steuergeräte (10) nach einem der Ansprüche 1 bis 8 vorgesehen sind,
welche mittels eines Steuerungsnetzwerks (50) miteinander kommunizieren.

12. System (40) nach einem der Ansprüche 9 bis 10, **dadurch gekennzeichnet dass**, mindestens zwei Steuergeräte (10) nach Anspruch 4 vorgesehen sind, welche mittels eines Feldbusses miteinander kommunizieren.
